# EUROPÄISCHE PATENTANMELDUNG

(11) **EP 1 566 108 A1**
(43) Veröffentlichungstag der Anmeldung: **24.08.2005**
(21) Anmeldenummer: 04003903.4
(22) Anmeldetag: 20.02.2004
(51) Int. Cl.: A23L 1/015

(54) **Verfahren und Vorrichtung zur Entgiftung von Getreide**

(71) Anmelder: Amandus Kahl GmbH & Co. KG, 21465 Reinbek (DE)
(72) Erfinder: Graf von Reichenbach, Heinrich, Dr., 21465 Reinbek (DE); Sitzmann, Werner, Dr.-Ing., 21075 Hamburg (DE); Behrmann, Joachim, 21465 Wentorf (DE)
(74) Vertreter: Glawe, Delfs, Moll

(57) **Zusammenfassung**

Gegenstand der Erfindung sind ein Verfahren und eine Vorrichtung zur Entgiftung von mit Mycotoxinen vergiftetem Getreide. Das Verfahren ist dadurch gekennzeichnet, dass das Getreide in einen Mischerraum gefüllt wird und durch ein Entgiftungsreagenz unter Zufuhr von Wasserdampf entgiftet wird. Das Verfahren kann in einem Mischer-Konditionierer, einem Expander, einem hydrothermischen Reaktor oder einem Bandkocher-System angewendet werden. Die Vorrichtung kann eine Mischeinheit, eine Einrichtung zur Zufuhr von Flüssigkeit und Wasserdampf, einen geschlossenen Luftkreislauf mit Heizregister sowie einen Filter aufweisen.

## Beschreibung

Die Erfindung betrifft ein Verfahren und eine Vorrichtung zur Entgiftung von mit Mycotoxinen kontaminiertem Getreide.

Kontamination von Erntegütern durch Pilzgifte, sog. Mycotoxine, ist ein weltweites Problem. Diese hochgiftigen, natürlich vorkommenden Verbindungen werden als sekundäre Stoffwechselprodukte verschiedener Pilzarten sowohl auf dem Felde als auch während der Produktlagerung gebildet. Diese Toxine sind im allgemeinen chemisch stabil und persistent. Hauptkontaminanten in heimischen Feldfrüchten, insbesondere Getreidearten, sind Pilze der Gattung *Fusarium.* Diese Pilze synthetisieren Trichothecene, zu denen auch das Mycotoxin Desoxynivalenol (DON) zählt.

In Nutztierbeständen entstehen infolge der Verfütterung mycotoxinhaltiger Futtermittel erhebliche wirtschaftliche Verluste. So kann DON bereits die Futteraufnahme und Futterverwertung von Schweinen deutlich reduzieren und massive Verdauungsstörungen verursachen. Aufgrund seiner immunsuppressiven Wirkung verursacht z. B. Zearalenon eine hohe Infektionsanfälligkeit und wegen seiner hormonähnlichen Wirkung Fruchtbarkeitsstörungen. Andere Pilzgifte, wie z. B. die Aflatoxine und das Ochratoxin A sind krebserregend und verursachen Nieren- oder Leberschädigungen. Die Mycotoxin-Kontamination von Getreide wird weiterhin noch verschärft durch steigende Ernteerträge und die Änderung pflanzenbaulicher Praktiken. So nimmt durch den zunehmenden Verzicht auf Fruchtfolgewechsel (Monokultur), Mais als Vorfrucht, durch den Übergang zu pflugloser Bodenbearbeitung, stetig dichter werdende Pflanzenbestände und die Praxis des Kurzspritzens von Getreide mit Halmverkürzungsmitteln der Befallsdruck des Getreides durch Pilze ständig zu. Weiterhin ist die bisher übliche Praxis, den Mycotoxingehalt kontaminierter Getreidechargen durch Verschneiden unter die zulässigen Grenzwerte zu strecken, durch Verbot nicht mehr durchführbar.

Zunächst seien einige der im Rahmen der Erfindung verwendeten Begriffe erläutert. Mycotoxine sind Gifte, die in Pilzen vorkommen. Die im Lebensmittel- und Futtermittelbereich relevanten Mycotoxine entstammen hauptsächlich verschiedener Arten der drei Pilzgattungen *Aspergillus, Penicillium* und *Fusarium.* Die *Aspergillus-* und *Penicillium*-Arten sind als sog. Lagerschadorganismen bekannt, welche sich in der Feldfrucht nach der Ernte und während der Lagerung entwickeln. *Fusarium*-Arten hingegen sind sog. Feldpilze, die sich auf und in ihren Wirtspflanzen entwickeln, während diese ihre vegetativen und generativen Wachstumsstadien durchlaufen.

*Fusarium* ist die Hauptkontaminante in heimischen Feldfrüchten, insbesondere Getreidearten. Dieser Pilz synthetisiert Trichothecene des Typs A, wie z. B. HT-2 Toxin, T-2 Toxin und Diacetoxysirpenol. Weitaus bedeutendere Gifte aus *Fusarium* sind die Trichothecene Desoxynivalenol (DON), sowie das Zearalenon und Fumonisin.

Die Gattung *Aspergillus* synthetisiert Mycotoxine unterschiedlicher chemischer Zusammensetzung und toxischer Aktivität. Zu ihnen gehören die Aflatoxine, Cyclopiazonsäuren und Ochratoxine. Aflatoxine stellen ein großes Kontaminationsproblem bei Produkten aus tropischen und subtropischen Regionen dar. Sie sind in heimischen pflanzlichen Erzeugnissen jedoch nicht von Bedeutung.

Die Pilzgattung *Penicillium* produziert Ochratoxine, aber auch andere Toxine wie Patulin und Citrin. Ochratoxine werden auch in Gerste gefunden.

Desoxynivalenol (DON) ist ein Mycotoxin, das zu der Gruppe der Trichothecene gehört, welche in Pilzarten der Gattung *Fusarium* synthetisiert werden. DON ist durch seine allgemeine Zytotoxizität und seine immunsuppressive Wirkung bekannt. Besonders bei Schweinen wird durch DON-belastetes Futter die Infektionsanfälligkeit erhöht, und es kann zu unspezifischen Krankheitssymptomen kommen, die nicht als Futterproblem erkannt werden. So wird bei Schweinen die Futteraufnahme und Futterverwertung deutlich reduziert, und es treten massive Verdauungsstörungen auf. Die Konzentrationen von Mycotoxinen in Futtermitteln sind sehr unterschiedlich. Häufig liegt die Belastung im Mikrogrammbereich, aber sie kann, besonders bei DON, Werte von einigen Milligramm pro kg Getreide erreichen.

Einige Verfahren zur Beseitigung von Mycotoxinen in Futtermitteln sind im Stand der Technik bekannt. Dazu gehören die Hemmung des Pilzwachstums auf Feld- und Lagerfrüchten durch Bakterienpräparate oder durch Aldehyde oder Aldehydderivate, die Steigerung der Detoxifizierungsaktivität der Nutzpflanzen durch die Gentechnologie, sowie die Extraktion der Toxine aus den Ernteprodukten mit Salzlösungen. Weiterhin werden Toxinbindemittel (Adsorber) verwendet, die die Toxine oberflächlich an sich binden, sowie Schleifverfahren zur äußerlichen Reinigung des Getreidekorns. Verfahren zur Zerstörung der Mycotoxine wenden eine Behandlung mit hohen Temperaturen oder Strahlung an (ultraviolette Strahlung oder Ionisierung). Ebenso bekannt sind eine Behandlung mit Ammoniak und Monomethylamin und auch der Einsatz von Enzymen.

Der Erfindung liegt die Aufgabe zugrunde, ein Verfahren zu schaffen, das mit Mycotoxinen kontaminiertes Getreide entgiftet.

Die Erfindung löst diese Aufgabe dadurch, dass das Verfahren dadurch gekennzeichnet ist, dass:
a) das Getreide in einen Mischerraum gefüllt wird,
b) Wasser, in welchem ein Entgiftungsreagenz gelöst ist, eingesprüht wird,
c) Wasserdampf in den Mischerraum eingedüst wird,
d) das Getreide vor oder während einer Konditionierung in Entgiftungsreaganz mechanisch bewegt wird,
e) das Getreide in einen Nachbehälter entleert wird.

Die erfindungsgemäße Lösung dieser Aufgabe beruht auf dem Prinzip, dass das Entgiftungsreagenz, bevorzugt Na₂S₂O₅ (Natriumbisulfit), mit dem Mycotoxin, bevorzugt DON, eine chemisch stabile Verbindung eingeht. Das DON-Molekül wirkt dadurch nicht mehr toxisch und wird im Verdauungstrakt der Tiere abgebaut.

Der Erfindung liegt auch die Aufgabe zugrunde, eine Vorrichtung zu schaffen, die mit Mycotoxinen kontaminiertes Getreide entgiftet.

Die Erfindung löst diese Aufgabe dadurch, dass die Vorrichtung zur Entgiftung von mit Mycotoxinen kontaminiertem Getreide aufweist:
a) einen Vorbehälter zur Aufnahme des Getreides,
b) eine Mischeinheit mit einer Mischerwelle und daran über stabförmige Elemente in einem Abstand angeordneten Mischpaddeln,
c) eine Einrichtung zur Zufuhr von Flüssigkeit und Wasserdampf in die Mischeinheit,
d) eine Einrichtung zur Zufuhr und Abfuhr von Trocknungs- und Kühlungsluft in die Mischeinheit,
e) eine Staubabscheidungsanlage mit Filter zur Reinigung der Abluft und
f) einen Nachbehälter.

Die Erfindung hat gezeigt, dass ein Verfahren der genannten Art besonders geeignet ist, mit Mycotoxinen kontaminiertes Getreide zu entgiften. Das kontaminierte Getreide wird in einen Mischerraum gefüllt. Dann wird Wasser, in welchem das Entgiftungsreagenz gelöst ist, eingesprüht. Erfindungsgemäß kann auch Wasserdampf in den Mischerraum eingedüst werden, der dann an dem Getreide kondensiert. Das Getreide kann vor oder während einer Konditionierung in Entgiftungsreagenz mechanisch bewegt werden. Danach kann das Getreide in einen Nachbehälter entleert werden.

Erfindungsgemäß ist das Mycotoxin bevorzugt Desoxynivalenol (DON).

Die Erfindung sieht vor, dass das Getreide bevorzugt Weizen ist.

Im Rahmen der Erfindung ist das Entgiftungsreagenz bevorzugt Na₂S₂O₅ (Natriumbisulfit). Die Konzentration an Na₂S₂O₅ im eingesprühten Wasser kann 0,1 bis 10 g pro kg Weizen, vorzugsweise 0,1 bis 5 g pro kg Weizen, besonders bevorzugt 1 bis 3 g pro kg Weizen betragen.

Das Entgiftungsreagenz Na₂S₂O₅ kann entweder im eingesprühten Wasser gelöst sein (Feuchtvariante), oder kann als Feststoff dem Mischer zugeführt werden (Trockenvariante).

In den Mischerraum können Additive zugegeben werden, wie z. B. Aromastoffe und/oder Makro- oder Mikrokomponenten, die mit dem Getreide vermischt werden.

Das erfindungsgemäße Verfahren kann in einem Mischer-Konditionierer, einem Expander, einem hydrothermischen Reaktor, oder einem Bandkochersystem angewendet werden.

In einem Expander wird das zu behandelnde Material durch eine Förderschnecke gegen einen engen Austrittsspalt bewegt und durch die Reibung erhitzt. Die Temperatur kann durch Heizen und/oder Wasserdampfzugabe erhöht werden. Dabei baut sich ein erhöhter Druck auf. Dieser wird in dem Moment schlagartig abgebaut, in dem das Material den Expander durch den engen Austrittsspalt verlässt. Überhitztes Wasser, das im Material enthalten ist, verdampft schlagartig und bläht dabei das Material auf.

Bei Anwendung des Verfahrens ist einem Mischer-Konditionierer wird das Getreide aus einem Vorbehälter in den Mischerraum gefüllt. Dann kann das Getreide in dem Mischer-Konditionierer von einer umlaufenden Mischerwelle mechanisch fluidisiert werden. Das Verfahren sieht vor, dass danach das Getreide durch Mischen und Einblasen von Trocknungsluft getrocknet und durch Einblasen von Kühlungsluft gekühlt werden kann. Bei Anwendung des Verfahrens in einem Mischer-Konditionierer ist das Getreide bevorzugt geschrotet.

Das Mischen des Getreides in der Mischeinheit kann durch eine umlaufende Mischerwelle 5 bis 60 Minuten, vorzugsweise 5 bis 30 Minuten, besonders bevorzugt 5 bis 15 Minuten lang erfolgen.

Der Wasserdampf kann 0,25 bis 15 Minuten, vorzugsweise 0,25 bis 5 Minuten, besonders bevorzugt 0,5 bis 3 Minuten in den Mischerraum eingedüst werden.

Die Konditionierung im Mischer mit der zugeführten Flüssigkeit kann ohne mechanische Bewegung für 1 bis 30 Minuten, bevorzugt 1 bis 15 Minuten, besonders bevorzugt 1 bis 5 Minuten erfolgen.

Das Einblasen von Trocknungsluft in den Mischer kann 1 bis 15 Minuten, bevorzugt 1 bis 10 Minuten, besonders bevorzugt 1 bis 3 Minuten lang erfolgen.

Erfindungsgemäß kann die Trockungsluft eine Temperatur von 20 bis 120°C, bevorzugt 20 bis 80°C, besonders bevorzugt 20 bis 60°C haben.

Erfindungsgemäß kann das Einblasen von Kühlungsluft 1 bis 15 Minuten, bevorzugt 1 bis 10 Minuten, besonders bevorzugt 1 bis 3 Minuten durchgeführt werden. Die Erfindung sieht weiterhin vor, dass die Kühlungsluft eine Temperatur von 5 bis 30°C, bevorzugt 5 bis 25°C, besonders bevorzugt 10 bis 20°C haben kann.

Die Erfindung sieht weiterhin vor, dass die Abluft durch einen Filter gereinigt werden kann.

Bei der Anwendung des Verfahrens in einem Expander kann nach vorangehender Vorkonditionierung mit Entgiftungsreagenz, flüssigem Wasser und Wasserdampf das kontaminierte zerkleinerte Getreide durch mechanischen Druck expandiert werden. Ein großer Vorteil des Expander-Verfahrens ist, dass nicht nur kontaminiertes Getreide allein, sondern auch fertige Futtermischungen entgiftet werden können.

Bei der Anwendung des Verfahrens in einem Expander kann das Material anschließend in einer Pelletpresse bearbeitet werden.

Bei der Anwendung des Verfahrens in einem hydrothermischen Reaktor wird nach Vorkonditionierung in einem Mischer-Konditionierer eine weitere Konditionierung in einem Reaktor durchgeführt, der mehrere übereinanderliegende Böden aufweisen kann.

Bei der Anwendung des Verfahrens in einem Bandkocher-System wird das kontaminierte Getreide mit einem Förderband gefördert.

Die Erfindung hat gezeigt, dass eine Vorrichtung der genannten Art besonders geeignet ist, Mycotoxine in Getreide, insbesondere DON, zu entgiften. Erfindungsgemäß kann diese Vorrichtung weiterhin an der Mischeinheit eine Zuluftklappe und eine Abluftklappe mit Ablufthaube aufweisen, durch welche Trocknungsluft strömen kann. Zusätzlich kann die Mischeinheit eine Bodenklappe zum Ablassen des entgifteten Produktes in den Nachbehälter haben. Die Vorrichtung kann einen geschlossenen Luftkreislauf aufweisen, über den die gefilterte Abluft wieder der Mischeinheit zugeführt wird. Dazu kann die Vorrichtung Kanäle aufweisen, durch die die gefilterte Abluft über einen Nachfilter und einen Kühler mit Tropfkammer und einem Heizregister wieder der Mischeinheit zugeführt wird.

Der Filter kann entweder als Bunkeraufsatzfilter direkt auf das Mischergehäuse aufmontiert sein, oder er kann als separate Einheit durch Luftkanäle mit der Mischeinheit verbunden sein. Diese separate Filtereinheit kann eine Zellradschleuse aufweisen, die das Filtergut aus dem Abscheidergehäuse austrägt.

Erfindungsgemäß können zwei Mischeinheiten hintereinander geschaltet sein, wobei der erste Mischer ein Konditioniermischer, und der zweite Mischer ein Trockner- und Kühlmischer ist.

Die erfindungsgemäße Vorrichtung wird im folgenden beispielsweise unter Bezugnahme auf die beigefügten Zeichnungen erläutert. Es zeigen:
- **Fig. 1**: eine erste Ausführungsform der Erfindung; und
- **Fig. 2**: eine zweite Ausführungsform.

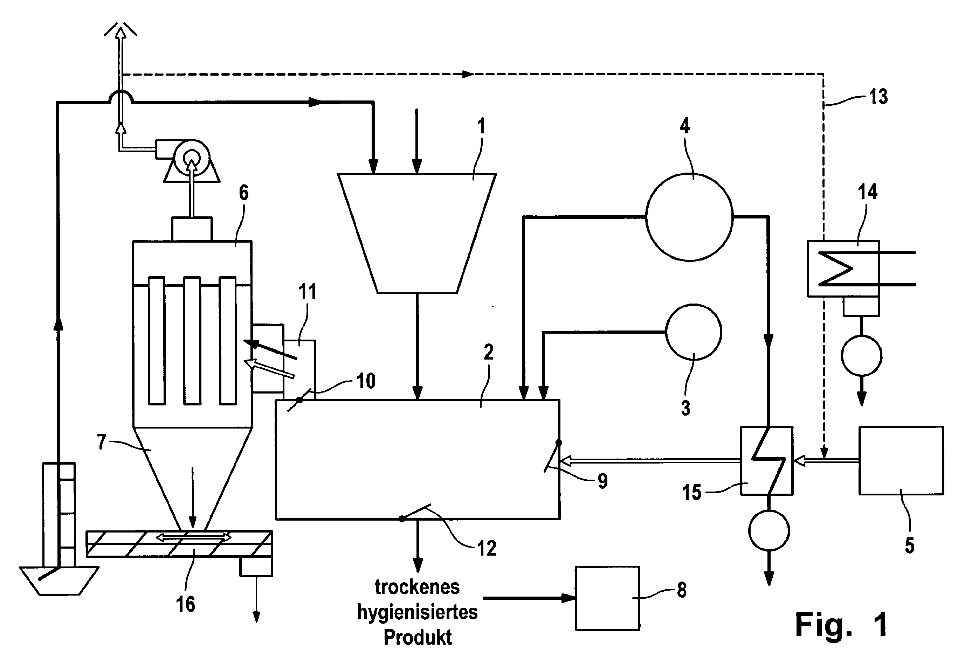

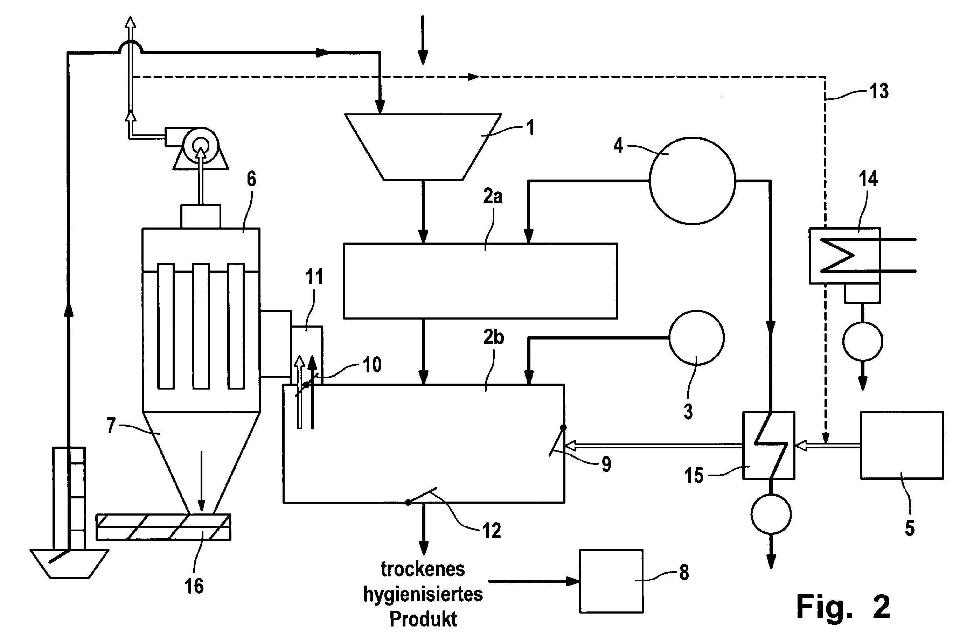

Das Verfahren der Erfindung kann angewendet werden in einem Mischer-Konditionierer. Diese erfindungsgemäße Vorrichtung zur Anwendung des Verfahrens ist in Figur 1 und Figur 2 dargestellt. Figur 1 zeigt einen Mischer-Konditionierer mit Vorbehälter 1, einer Misch- und Konditioniereinheit 2, einer Einrichtung zur Zufuhr von Flüssigkeit 3 und Wasserdampf 4, einer Einrichtung 5 zur Zufuhr und Abfuhr von Trocknungs- und Kühlungsluft, einer Staubabscheidungsanlage 6 mit Filter 7, Zuluftklappe 9 und Abluftklappe 10 mit Ablufthaube 11, einem geschlossenem Luftkreislauf 13, einem Kühler 14 sowie einem Heizregister 15. Figur 2 zeigt eine erfindungsgemäße Vorrichtung, in der nach einem Vorbehälter 1 zwei Mischeinheiten hintereinander geschaltet sind, wobei der erste Mischer ein Konditioniermischer 2a und der zweite Mischer ein Trockner- und Kühlmischer 2b ist. Weiterhin weist die Vorrichtung eine Einrichtung zur Zufuhr von Flüssigkeit 3 und Wasserdampf 4, eine Einrichtung 5 zur Zufuhr und Abfuhr von Trocknungs- und Kühlungsluft, eine Staubabscheidungsanlage 6 mit Filter 7, eine Zuluftklappe 9 und Abluftklappe 10 mit Ablufthaube 11, einen geschlossenen Luftkreislauf 13, einen Kühler 14 und ein Heizregister 15 auf.

Das Verfahren wird nachfolgend anhand von drei Ausführungsbeispielen erläutert.

### Beispiel 1

Geschroteter Weizen wurde mit Na₂S₂O₅ in der erfindungsgemäßen Vorrichtung behandelt, um den DON-Gehalt zu reduzieren.

Mit DON kontaminierter Weizen (DON-Konzentration ca. 7 mg/kg) wurde mit nicht kontaminiertem Weizen in drei Stufen verschnitten, so dass drei Weizenchargen mit abgestuften DON-Gehalten gemischt wurden, die jeweils mit vier verschiedenen Konzentrationen an Na₂S₂O₅ behandelt wurden.

Der Ablauf der Versuchsschritte war wie nachfolgend beschrieben:
1. Weizenpartien abwiegen (Weizen - Mariensee, DON-Weizen-Mariensee, insgesamt 24 kg) und im Konditionierer trocken für 5 min mischen.
2. Probe von 1 kg entnehmen.
3. Einsprühen des zusätzlichen Wassers, in welchem die entsprechende Menge an Na₂S₂O₅ aufgelöst ist, bis eine Weizenfeuchte von 22% erreicht wurde.
4. Konditionieren für 15 min bei 100°C.
5. Probe von 2 kg entnehmen und trocknen, 1 kg für Analytik bereitstellen.

Die Ergebnisse dieses Versuchs zeigt **Tabelle 1**.

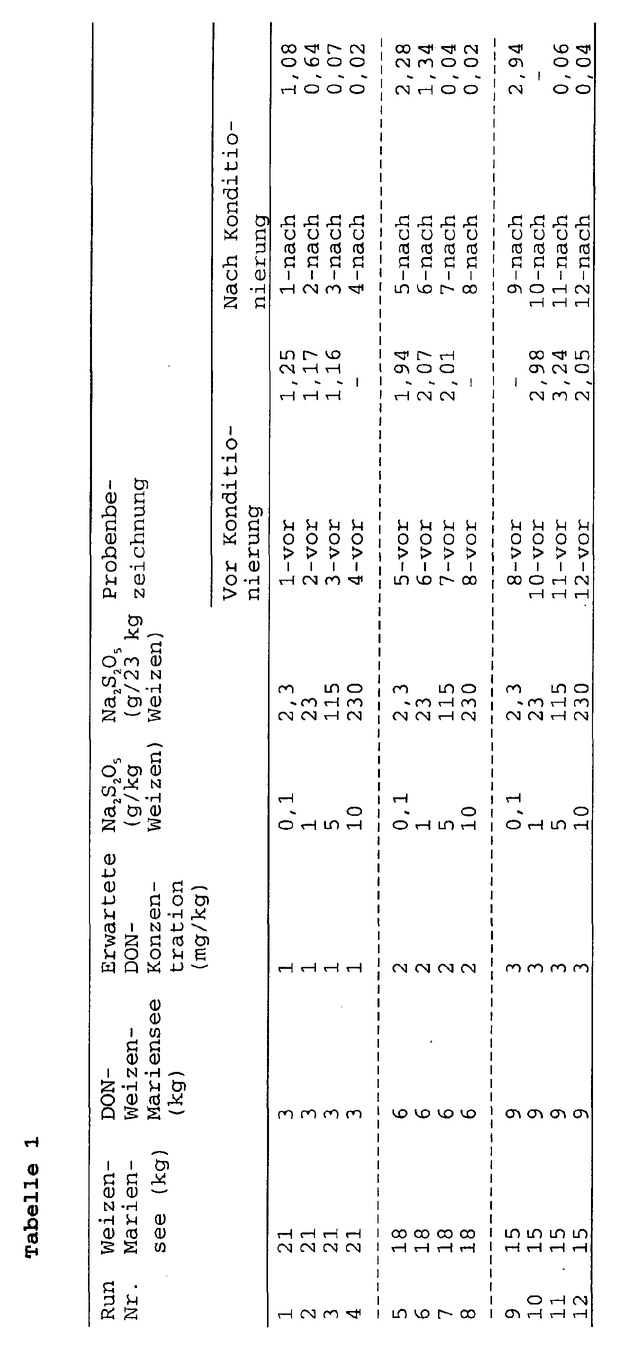

Das Beispiel zeigt, dass das erfindungsgemäße Verfahren eine Reduktion des DON-Gehaltes in geschrotetem Weizen bewirkt.

### Beispiel 2

Unzerkleinerter Weizen wurde mit Na₂S₂O₅ behandelt, um den DON-Gehalt zu reduzieren. Ganze Weizenkörner mit 2 mg/kg DON wurden unvermahlen mit Na₂S₂O₅ im Konditioniermischer hydrothermisch behandelt. Hierbei wurden 25 kg Weizen bei einer Temperatur von 100°C und 20% Feuchte für 10 min im Mischer konditioniert. Das Entgiftungsreagenz Na₂S₂O₅ wurde im Konditionierwasser gelöst zugegeben ("feucht"), oder bei der "Trocken"-Variante als Feststoff zugemischt, und das Getreide ohne zusätzliche Befeuchtung bedampft.

Die Ergebnisse dieses Versuchs zeigt **Tabelle 2**.

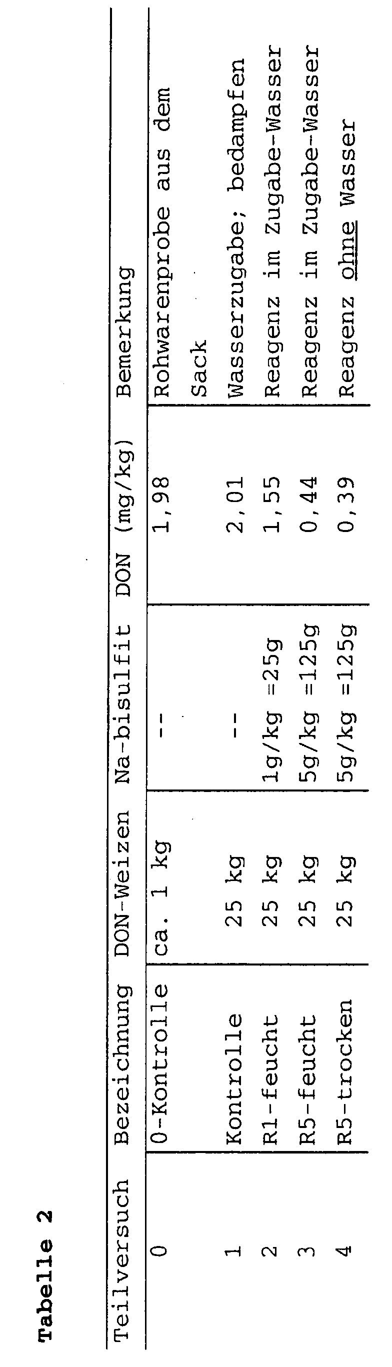

Das Beispiel zeigt, dass das erfindungsgemäße Verfahren auch bei unzerkleinertem Weizen eine Reduktion des DON-Gehaltes bewirkt. Hierbei kann das Entgiftungsreagenz Na₂S₂O₅ in fester oder in kristalliner Form zugegeben werden.

### Beispiel 3

Das erfindungsgemäße Verfahren wurde in einem Expander angewendet. Zerkleinerter Weizen wurde in einem Mischer-Konditionierer vorkonditioniert und dann in einem Expander unter Zudosierung von Entgiftungsreagenz Na₂S₂O₅ expandiert.

Der Ablauf der Versuchsschritte war wie nachfolgend beschrieben:
1. Kontaminierter Weizen (ca. 2 mg DON pro kg Weizen) wurde in einer Hammermühle zerkleinert. Von der zerkleinerten Rohware wurde eine Probe (500 g) zur DON-Bestimmung genommen (TV 1).
2. In einem Mischer-Konditionierer wurde der zerkleinerte Weizen auf eine Temperatur von 80°C und eine Feuchte von 14,5% bis 15% vorkonditioniert.
3. Der vorkonditionierte Weizen wurde zum einen bei 105°C bis 110°C und zum anderen bei 125°C bis 130°C in einem Expander OE 8 expandiert. Die Dosieranlage wurde auf 100 kg pro Stunde Durchsatz ausgelitert.
4. Expandiert wurde in beiden Temperaturstufen jeweils eine Kontrollprobe ohne Reagenz (nur Wasserzugabe, TV 2 und TV 3), sowie zwei Varianten mit unterschiedlichen Reagenzkonzentrationen (TV 4 bis TV 7). Beim Expandieren wurde in den Kontrollen TV 2 und TV 3 kontinuierlich soviel Wasser in den Expander-Einlaufschacht dosiert, das 16% bis 17% Rohwarenfeuchte eingestellt wurde. Bei den Varianten mit Reagenz (TV 4 bis TV 7) wurde statt des Wassers eine Na₂S₂O₅-Lösung in Wasser zudosiert. Hierbei wurden die Reagenzkonzentrationen so eingestellt, dass die Trockenmasse-Zugabemengen an Reagenz möglichst genau 1 g pro kg Weizen bzw. 5 g pro kg Weizen entsprachen.

Alle Proben wurden in einem Schubladentrockner auf weniger als 12% Feuchte getrocknet.

Die Ergebnisse dieses Versuchs zeigt **Tabelle 3**.

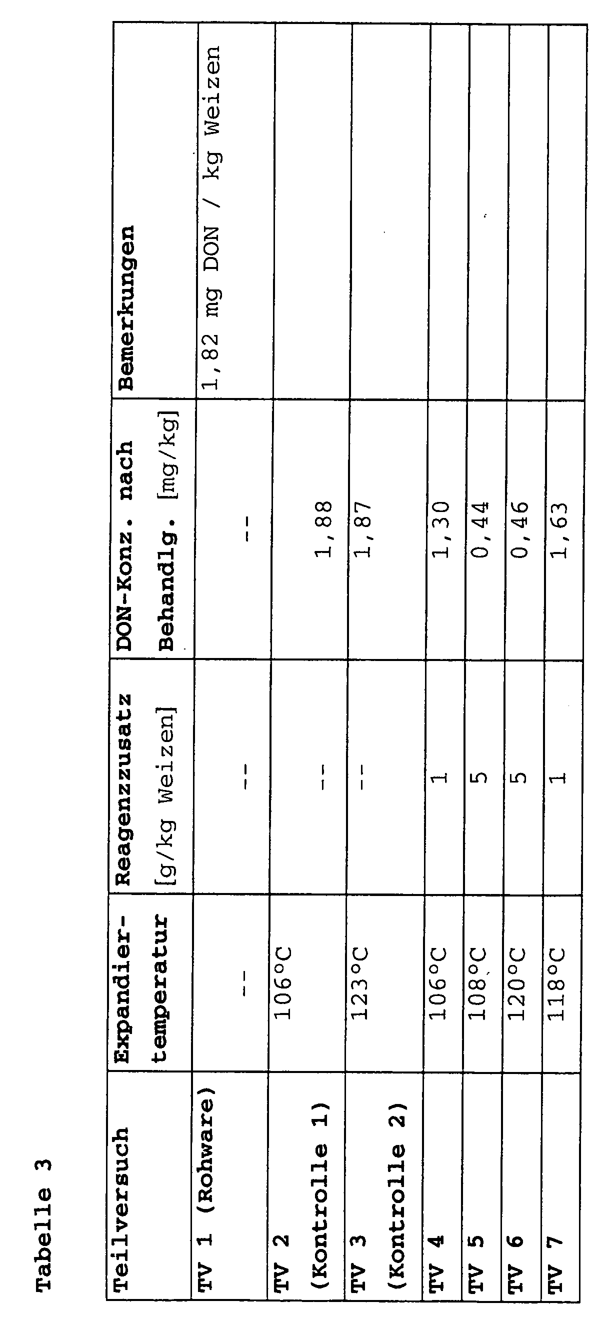

Das Beispiel zeigt, dass das erfindungsgemäße Verfahren auch in einem Expander eine Reduktion des DON-Gehalts in Weizen bewirkt.

Eine Vorkonditionierung und Expandierung bei 106°C (TV 2) bzw. 123°C (TV 3) ohne Zugabe von Reagenz bewirkte keinerlei Reduzierung des DON-Gehaltes.

Mit einer sehr niedrigen Aufwandmenge von 1 g Reagenz pro kg Weizen war eine gewisse Reduzierung der DON-Konzentration zu erreichen (TV 4 und TV 7). Eine erhöhte Expandiertemperatur bewirkte keine stärkere DON-Eliminierung. Mit einer Reagenzkonzentration von 5 g pro kg Weizen bewirkte die Expandierung der beiden Temperaturstufen eine gleichstarke Reduzierung des DON-Gehalts auf ein Viertel der Ausgangskonzentration (TV 5 und TV 6).

Eine noch stärkere Behandlungswirkung könnte erzielt werden, wenn das Reagenz in den Mischer-Konditionierer zum Vorkonditionieren und nicht direkt in den Expander dosiert würde.

## Patentansprüche

1. Verfahren zur Entgiftung von mit Mycotoxinen kontaminiertem Getreide, **dadurch gekennzeichnet, dass**
a) das Getreide in einen Mischerraum gefüllt wird,
b) Wasser, in welchem ein Entgiftungsreagenz gelöst ist, eingesprüht wird,
c) Wasserdampf in den Mischerraum eingedüst wird,
d) das Getreide vor oder während einer Konditionierung in Entgiftungsreaganz mechanisch bewegt wird,
e) das Getreide in einen Nachbehälter entleert wird.

2. Verfahren nach Anspruch 1, **dadurch gekennzeichnet, dass** das Mycotoxin Desoxynivalenol (DON) ist.

3. Verfahren nach Anspruch 1 oder 2, **dadurch gekennzeichnet, dass** das Getreide Weizen ist.

4. Verfahren nach einem der Ansprüche 1 bis 3, **dadurch gekennzeichnet, dass** das Entgiftungsreagenz Na₂S₂O₅ (Natriumbisulfit) ist.

5. Verfahren nach Anspruch 4, **dadurch gekennzeichnet, dass** die Konzentration an Na₂S₂O₅ im eingesprühten Wasser 0,1 bis 10 g pro kg Getreide, vorzugsweise 0,1 bis 5 g pro kg Getreide, besonders bevorzugt 1 bis 3 g pro kg Getreide beträgt.

6. Verfahren nach Anspruch 4 oder 5, **dadurch gekennzeichnet, dass** das Entgiftungsreagenz Na₂S₂O₅ im eingesprühten Wasser gelöst (Feuchtvariante), oder als Feststoff dem Mischer zugeführt wird (Trockenvariante).

7. Verfahren nach einem der Ansprüche 1 bis 6, **dadurch gekennzeichnet, dass** Additive in den Mischerraum gegeben und mit dem Getreide vermischt werden.

8. Verfahren nach Anspruch 7, **dadurch gekennzeichnet, dass** die Additive Aromastoffe und/oder Makro- oder Mikrokomponenten sind.

9. Verfahren nach einem der Ansprüche 1 bis 8, **dadurch gekennzeichnet, dass** es in einem Mischer-Konditionierer, einem Expander, einem hydrothermischen Reaktor, oder einem Bandkocher-System angewendet wird.

10. Verfahren nach Anspruch 9, **dadurch gekennzeichnet, dass** bei Anwendung in einem Mischer-Konditionierer das Getreide aus einem Vorbehälter in den Mischerraum gefüllt wird.

11. Verfahren nach Anspruch 10, **dadurch gekennzeichnet, dass** das Getreide in dem Mischer-Konditionierer von einer umlaufenden Mischerwelle mechanisch fluidisiert wird.

12. Verfahren nach Anspruch 10 oder 11, **dadurch gekennzeichnet, dass** das Getreide durch Mischen und Einblasen von Trocknungsluft getrocknet wird.

13. Verfahren nach einem der Ansprüche 10 bis 12, **dadurch gekennzeichnet, dass** das Getreide durch Einblasen von Kühlungsluft gekühlt wird.

14. Verfahren nach einem der Ansprüche 10 bis 13, **dadurch gekennzeichnet, dass** das Getreide geschrotet ist.

15. Verfahren nach einem der Ansprüche 10 bis 14, **dadurch gekennzeichnet, dass** das Mischen durch eine umlaufende Mischerwelle 5 bis 60 Min., vorzugsweise 5 bis 30 Min., besonders bevorzugt 5 bis 15 Min. lang erfolgt.

16. Verfahren nach einem der Ansprüche 10 bis 15, **dadurch gekennzeichnet, dass** der Wasserdampf 0,25 bis 15 Min., vorzugsweise 0,25 bis 5 Min., besonders bevorzugt 0,5 bis 3 Min. in den Mischraum eingedüst wird.

17. Verfahren nach einem der Ansprüche 10 bis 16, **dadurch gekennzeichnet, dass** das Getreide ohne mechanische Bewegung für 1 bis 30 Min., bevorzugt 1 bis 15 Min., besonders bevorzugt 1 bis 5 Min. mit der zugeführten Flüssigkeit in dem Mischer konditioniert wird.

18. Verfahren nach einem der Ansprüche 10 bis 17, **dadurch gekennzeichnet, dass** das Einblasen von Trocknungsluft 1 bis 15 Min., bevorzugt 1 bis 10 Min., besonders bevorzugt 1 bis 3 Min. durchgeführt wird.

19. Verfahren nach einem der Ansprüche 10 bis 18, **dadurch gekennzeichnet, dass** die Trocknungsluft eine Temperatur von 20 bis 120°C, bevorzugt 20 bis 80°C, besonders bevorzugt 20 bis 60°C hat.

20. Verfahren nach einem der Ansprüche 10 bis 19, **dadurch gekennzeichnet, dass** das Einblasen von Kühlungsluft 1 bis 15 Min., bevorzugt 1 bis 10 Min., besonders bevorzugt 1 bis 3 Min. durchgeführt wird.

21. Verfahren nach einem der Ansprüche 10 bis 20, **dadurch gekennzeichnet, dass** die Kühlungsluft eine Temperatur von 5 bis 30°C, bevorzugt 5 bis 25°C, besonders bevorzugt 10 bis 20°C hat.

22. Verfahren nach einem der Ansprüche 10 bis 21, **dadurch gekennzeichnet, dass** die Abluft durch einen Filter gereinigt wird.

23. Verfahren nach Anspruch 9, **dadurch gekennzeichnet, dass** bei Anwendung in einem Expander das aus dem Mischerraum austretende Material in einer Pelletpresse bearbeitet wird.

24. Verfahren nach Anspruch 23, **dadurch gekennzeichnet, dass** das Getreide durch eine Press- oder Förderschnecke befördert wird.

25. Verfahren nach Anspruch 23 oder 24, **dadurch gekennzeichnet, dass** das Getreide durch eine oder mehrere verengte Austrittsöffnungen befördert wird.

26. Vorrichtung zur Entgiftung von mit Mycotoxinen kontaminiertem Getreide, **dadurch gekennzeichnet, dass** sie aufweist:
a) einen Vorbehälter (1) zur Aufnahme des Getreides,
b) eine Mischeinheit (2) mit einer Mischerwelle und daran über stabförmige Elemente in einem Abstand angeordneten Mischpaddeln,
c) eine Einrichtung zur Zufuhr von Flüssigkeit (3) und Wasserdampf (4) in die Mischeinheit (2),
d) eine Einrichtung (5) zur Zufuhr und Abfuhr von Trocknungs- und Kühlungsluft in die Mischeinheit,
e) eine Staubabscheidungsanlage (6) mit Filter (7) zur Reinigung der Abluft und
f) einen Nachbehälter (8).

27. Vorrichtung nach Anspruch 26, **dadurch gekennzeichnet, dass** die Mischeinheit (2) eine Zuluftklappe (9) und eine Abluftklappe (10) aufweist.

28. Vorrichtung nach Anspruch 27, **dadurch gekennzeichnet, dass** die Abluftklappe (10) eine Ablufthaube (11) aufweist.

29. Vorrichtung nach einem der Ansprüche 26 bis 28, **dadurch gekennzeichnet, dass** die Mischeinheit eine Bodenklappe (12) aufweist.

30. Vorrichtung nach einem der Ansprüche 26 bis 29, **dadurch gekennzeichnet, dass** sie einen geschlossenen Luftkreislauf (13) aufweist, über den die gefilterte Abluft wieder der Mischeinheit (2) zugeführt wird.

31. Vorrichtung nach einem der Ansprüche 26 bis 30, **dadurch gekennzeichnet, dass** sie Kanäle aufweist, durch die die gefilterte Abluft über einen Nachfilter und einen Kühler (14) mit Tropfkammer wieder der Mischeinheit (2) zugeführt wird.

32. Vorrichtung nach einem der Ansprüche 26 bis 31, **dadurch gekennzeichnet, dass** sie Kanäle aufweist, durch die die gefilterte Abluft nach Durchlaufen des Kühlers (14) mit Tropfkammer über ein Heizregister (15) wieder der Mischeinheit (2) zugeführt wird.

33. Vorrichtung nach einem der Ansprüche 26 bis 32, **dadurch gekennzeichnet, dass** der Filter (7) entweder
a) direkt auf das Mischergehäuse aufmontiert ist (Bunkeraufsatzfilter), oder
b) als separate Einheit durch Luftkanäle mit der Mischeinheit (2) verbunden ist..

34. Vorrichtung nach Anspruch 33, **dadurch gekennzeichnet, dass** die separate Filtereinheit eine Zellradschleuse (16) aufweist, die das Filtergut aus dem Abscheidergehäuse austrägt.

35. Vorrichtung nach einem der Ansprüche 26 bis 34, **dadurch gekennzeichnet, dass** zwei Mischeinheiten hintereinänder geschaltet sind, wobei
a) der erste Mischer ein Konditioniermischer (2a) und
b) der zweite Mischer ein Trockner- und Kühlmischer (2b) ist.
